# EUROPEAN PATENT APPLICATION

(11) **EP 1 239 184 A2**
(43) Date of publication of application: **11.09.2002**
(21) Application number: 02251535.7
(22) Date of filing: 05.03.2002
(51) Int. Cl.: F16G 1/24, F16H 9/24

(54) **Compression type inverted tooth chain**

(30) Priority: 05.03.2001 US 273365
(71) Applicant: BorgWarner Inc., Troy, Michigan 48007-5060 (US)
(72) Inventor: Mott, Philip J., Dryden, New York 13053 (US); White, David C., Dryden, New York 13053 (US)
(74) Representative: Lerwill, John

(57) **Abstract**

An inverted tooth chain which transmits power through compression. The chain has two kinds of elements, connected together by pins: inner sprocket-engaging blocks, and outer force-transmitting guide links. The ends of the sprocket-engaging blocks arc connected by pins to adjoining guide links. A retaining band, preferably made of a number of laminated steel bands, runs over the backs of the sprocket-engaging blocks, and is held in place by pins running across the chain between the tops of the guide links. The sprocket engaging blocks have teeth extending inward to engage the mating teeth of sprockets, and the outward facing backs of the blocks are preferably curved and crowned to form a surface for the steel bands to center themselves as they run. The guide links are shaped to transfer the load from link to link through flat end surfaces, and are extended outward so that the pairs of guide links form rails within which the steel bands are contained.

## Description

### BACKGROUND OF THE INVENTION

### FIELD OF THE INVENTION

The present invention relates generally to a system of transmitting power from a rotating shaft to at least one other rotating shaft, and to a chain for transmitting power between the shafts. The present invention is particularly directed to a system where sprockets of fixed diameter are mounted on the shafts, and the chain engages the teeth of the sprockets. However, the chain of the present invention may be used with various types of power transmission systems employing rotating shafts.

### DESCRIPTION OF RELATED ART

Power transmission chains are widely used in the automotive industry in automobile transmission systems as well as in engine timing drives. Engine timing systems conventionally include at least one driving sprocket located on the crankshaft and at least one driven sprocket located on a camshaft. Rotation of the crankshaft causes rotation of the camshaft through a chain. In automotive transmission systems, power transmission chains are used, for example, between a torque converter and the input to an automatic transmission. Power transmission chains are also used in transfer cases for four-wheel drive vehicles.

Chain technology has focused primarily on pull style belts, which transmit power through tension, the driving sprocket pulling on the chain and thus transmitting the force to the driven sprocket. Product innovations have consisted of evolutionary changes to a design that has remained fairly constant for many years. Current technology has reached the point where it takes many small design changes to create an improvement in performance.

The development of a compression style belt is an attempt to make a step change in product performance by using the concept of push belt technology, where the driving sprocket transmits force by compression, pushing on the chain or belt to transfer power to the driven sprocket, as opposed to pull belt technology. It is desirable to significantly increase the "power density" of the belt, yielding greater load carrying capacity from the same package space.

A number of different methods are employed to provide power transmission between rotating shafts. One such method involves a continuously variable transmission system (CVT). In contrast to a transmission system employing sprockets or gears which provide a discrete number of fixed transmission ratios, a CVT system provides any transmission ratio within an allowable range. In general, an endless belt provides power transmission between a drive shaft pulley and at least one driven shaft pulley. Each pulley comprises a pair of conical disks, or sheaves, with converging ends facing each other, so that a groove is formed between the conical disks, and the belt is positioned within the groove. In at least one pulley, one conical disk is axially moveable with respect to the other. Because the diameter of the conical disk varies along the axis of the disk, axial movement of the moveable disk changes the running diameter of the belt around the pulley. This change in the running diameter results in a change of the transmission ratio.

Typically, CVT belts comprise a number of endless metal bands, such as laminated metal strips formed in a loop. A plurality of transverse elements are positioned along the bands, with the bands received in slots in the transverse elements. The transverse elements are typically stamped metal plates arranged front to back around the loop of the endless carriers. The transverse elements typically have a generally trapezoidal shape, with at least two surfaces adapted to contact the sides of the pulleys, thereby providing power transmission between the belt and the pulleys. Koppelaars, U.S. Pat. No. 4,894,049, "Transmission Belt, Cross Element for a Transmission Belt and Method and Device for the Production Thereof' discloses a typical CVT belt known in the art, as is manufactured by Van Doorne's Transmissie B.V. (Tilburg, Netherlands) and has been used in a number of production automobiles since the early 1990's.

Another type of power transmission system employs a chain with links having inverted teeth, sometimes referred to as a silent chain, and at least one toothed sprocket on each rotating shaft. Power transmission between each sprocket and the chain, and consequently between one sprocket and another sprocket, is provided by the meshing of the sprocket teeth with the inverted teeth of the chain.

Inverted tooth chains are formed by an arrangement of link plates in lateral and longitudinal directions. The links are interlaced and joined by pins. A typical chain is composed of inner links, which contact the teeth of a sprocket to provide power transmission, and guide links, which do not provide power transmission. Guide links are employed to maintain the chain on the center of the sprocket when the chain is wound around the sprocket. A row of link plates, arranged in the lateral direction, typically has a number of inner links combined with guide links in the center or at both edges of the row. Each inner link plate typically comprises a body portion having a pair of apertures for receiving the pins, and at least one depending toe shaped to fit between the teeth of the sprocket and provide power transmission therewith. Ledvina and Mott, U.S. Pat. No. 5,437,581, "Phased Chain Assemblies", shows an inverted tooth chain known in the art.

Inverted tooth chains and CVT belts each have certain disadvantages with respect to strength and durability. CVT belts typically have limited capacity when wrapped around pulleys of small diameter, because of the acute bending required of the metal bands. On the other hand, excessive torque applied to a CVT belt is transmitted along the length of the belt by compression of the transverse elements against each other. Failure resulting from such torque only occurs if the torque is sufficient to cause deformation of the transverse elements or tensile failure from the bending of the CVT belt. Accordingly, CVT belts are generally less susceptible to failure from excessive torque when operated over a large diameter rotating member.

Inverted tooth chains, which articulate by the rotation of link plates about the pins, do not have a problem when employed with sprockets of small diameter. However, inverted tooth chains are susceptible to damage resulting from a large torque applied to one of the rotating shafts. Excessive torque applied to an inverted tooth chain may cause bending of the pins or failure of the link plates in the area around the pin apertures.

The concept of using the compression band technology for fixed ratio drives has been questioned due to the limited ability to impart tension to the bands. In typical fixed ratio drives there is positive engagement between the belt (chain) and the driven element (sprocket). For example, a typical Hy-Vo® chain manufactured by BorgWarner Inc., the assignee of the present application, toes of the chain engage with the sprocket teeth to provide a means of power transmission between the two shafts. The steel bands carry these engaging elements from sprocket to sprocket. Unlike the variable ratio drives, the tension in the bands must come from another source.

Bonnell, U.S. Patent 576,719, "Bicycle Gearing", shows a toothed chain in which power is transmitted by compression. The teeth of the chain are on the outside, and the chain rests in a guide channel to hold the links rigid and flat while power is being transmitted. Bonnell's toothed links are also used as power-transmitting links, and the interconnecting links serve only to connect the toothed links together.

Mott, U.S. Patent 5,993,345, "Compression Fixed Ratio Chain", uses flat transverse elements similar to the VanDoorne's CVT band, but varies the length of the inward-pointing portions of the elements to form teeth against which a sprocket can drive.

### SUMMARY OF THE INVENTION

The invention is an inverted tooth chain which transmits power through compression. The chain has two kinds of elements, connected together by pins: inner sprocket-engaging blocks, and outer force-transmitting guide links. The ends of the sprocket-engaging blocks are connected by pins to adjoining guide links. A retaining band, preferably made of a number of laminated steel bands, runs over the backs of the sprocket-engaging blocks, and is held in place by pins running across the chain between the tops of the guide links. The sprocket engaging blocks have teeth extending inward to engage the mating teeth of sprockets, and the outward facing backs of the blocks are preferably curved and crowned to form a surface for the steel bands to center themselves as they run. The guide links are shaped to transfer the load from link to link through flat end surfaces, and are extended outward so that the pairs of guide links form rails within which the steel bands are contained.

### BRIEF DESCRIPTION OF THE DRAWING

Fig. 1 shows the chain of the invention, engaged with a pair of sprockets.
Fig. 2 shows a detail of a sprocket and several links of the chain of the invention, in the area marked by dashed lines "2" in figure 1.
Fig. 3 shows a sprocket-engaging block.
Fig. 4 shows a guide link.
Fig. 5 shows a cut-away view of a sprocket-engaging block and retaining bands, cut between two guide blocks, along the lines 5-5 in figure 2.

### DETAILED DESCRIPTION OF THE INVENTION

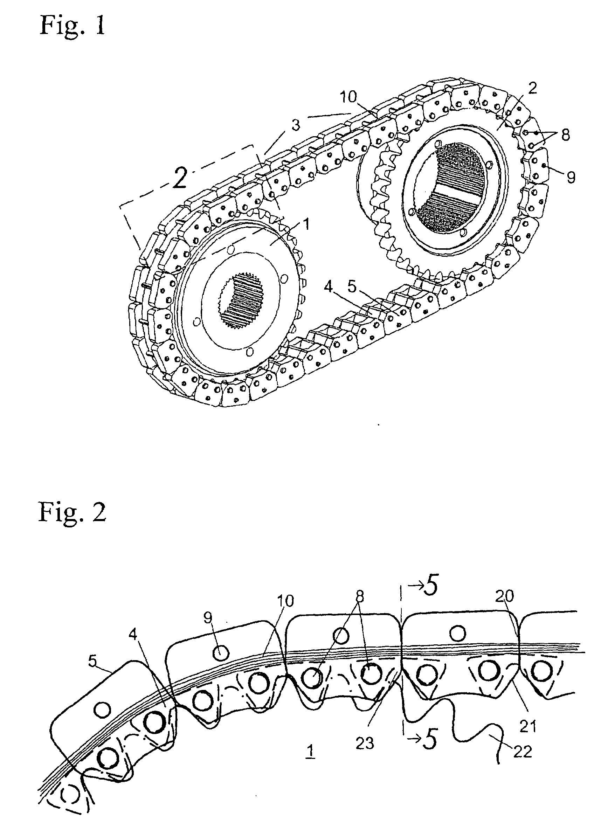

Figure 1 shows an overall view of the chain of the invention in use. The chain (3) of the invention runs over driving sprocket (1) and driven sprocket (2) (it will be understood that the assignment of "driving" and "driven" is arbitrary in this figure, for the purposes of discussion). As the driving sprocket is rotated in a clockwise direction, it exerts a compression force upon the upper length of chain (3), transmitting force to the driven sprocket, which rotates in a clockwise direction in response.

As shown in figures 2-5, the chain (3) of the invention comprises sprocket-engaging blocks (4), which have inverted teeth (33) for engaging the teeth (22) of the sprockets (1) and (2). The sprocket-engaging blocks (4) are attached by pins (8) to the guide links (5), which are in pairs on each side of the chain (3), overhanging the sprockets. A retaining band (10) runs around the outside of the sprocket-engaging blocks (4), between the upper walls of the guide links (5), and is held in place with pins (9). The details and functions of these parts will be detailed below.

### Sprocket Engaging "Blocks"

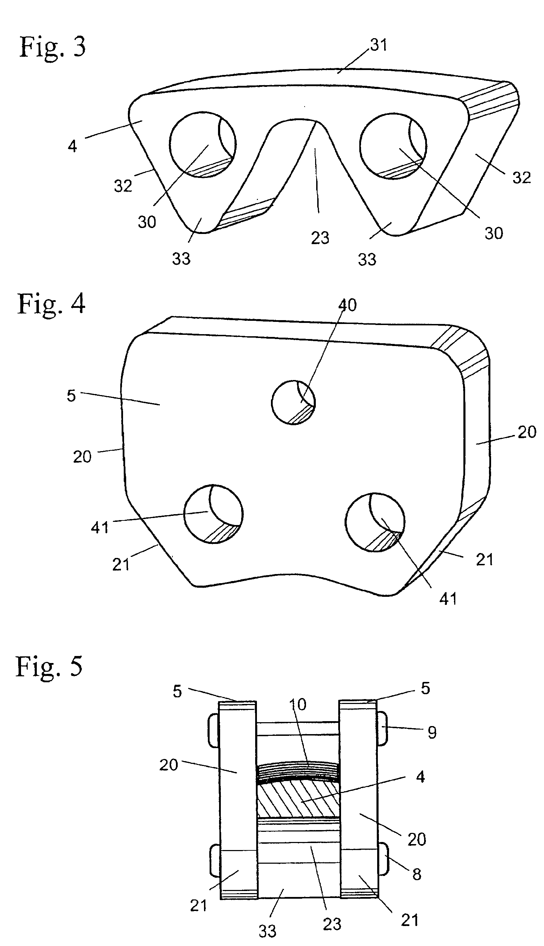

Figure 3 shows a detail of a sprocket-engaging block (3). In the embodiment shown in the figure, the engaging teeth (33) were designed using an existing HyVo profile, as is used in HyVo chain produced by BorgWarner Inc. The engaging teeth were widened to 0.400" thus forming a "block" that engages the sprocket teeth.

Since the pins (8), which run through holes (30) no longer carry the tensile load of the chain they can be decreased in diameter, relative to conventional chain pins. The sole purpose of the pins is now to transfer the load from the sprocket teeth to and mate the blocks (4) with the guide links (5). Test chains have used spring or roll pins instead of a conventional riveted solid pin.

The top surface (31) of the block can be crowned, as shown in figures 3 and 5, to provide a means for the steel bands (10) to center themselves as they run.

### Guide Links

The guide link (5) performs the function of load transfer from one block (4) to the next, through pins (8) in holes (41). They also extend upward to form rails between which the bands (10) run. There is an additional hole (40) in the upper portion of the guide link through which another roll pin (9) is inserted. This roll pin sandwiches the bands (10) between itself and the engaging blocks (4).

In the embodiment shown, the guide links (5) are designed with large flats (20) on the leading and trailing ends facing adjoining guide links. The lower end of the guide links (5) are slanted (21) to provide clearance for the links as they curve around the sprockets.

It was felt that the compression strand would stay flat in operation and the flat would maximize contact area and reduce contact stress. As will be discussed, this was actually not found to be the case in actual operation. The thickness of the guide link is preferably significantly greater than a conventional chain guide link, in the embodiment shown at 0.200". This was done as an effort to maximize bearing area between the compression members.

### Bands

A band (10) runs around the outside of the chain, in the trough formed by the extension of the top surface of the guide links (5) above the top surface of the sprocket engaging blocks (4). The bands (10) used in the invention can be of the same kind as those used in CVT belts. The bands are preferably layers of steel, ten layers in the embodiment shown, although a polymeric band could also be used within the teachings of the invention. The band acts to retain the sprocket-engaging blocks (4) against the sprockets (1)(2), and also resist any outward buckling force of the guide links (5) when they are under compression.

### Operation of the Chain

Figure 2 shows a section the chain (as denoted in the dotted rectangle 2 in figure 1), as it runs over a driving sprocket (1). The sprocket-engaging blocks (4), engage the teeth (22) of the sprocket (1) as it turns counterclockwise, with the inter-tooth gap (23) fitting over the sprocket teeth (22). This pushes the blocks (4) to the right in the figure. The force is transmitted from each block (4) to pins (8), and thus to the guide links (5) which surround the blocks (4). While the blocks (4) are engaged with the sprocket (1), and the chain is passing around the sprocket (1) in a circular path, the guide links (5) tilt, and the lower comers (21) provide the clearance necessary for them to pivot. As the chain passes away from the sprocket (1), it straightens out, and the sides (20) of the guide links (5) contact each other, so that the force transmitted from the blocks (4) through the pins (8) to the guide links (5) is then passed along from one link to the next link, until the chain reaches the next sprocket, and the force is then transferred back to the sprocket-engaging blocks and to the sprocket itself.

### Design Predictions

Band stress levels and elongation were concerns in the initial design phase of the belt. The stress levels of the bands were determined using working tension due to torque and centrifugal tension due to speed and running radius. Fully reversed bending stress for the bands was found to be ~50ksi. This is significantly less than the endurance limit of 125ksi as determined during testing of CVT bands.

Elongation of the bands is a significant concern as gaps in the belt must be minimized. If these gaps were allowed to accumulate at the entrance to a sprocket there is the possibility that the toes of the blocks will not correctly mesh with the sprocket teeth. This could lead to catastrophic failure. The predicted elongation of the belt shows that it will not elongate significantly under design loads.

### Initial Test Results

The compression belt system was initially run on the airborne NVH stand. This test stand is electric motor driven and drives an absorber.

As a means of rapidly building a prototype belt, the first engaging blocks were produced from molded plastic. The guide links were machined steel and the assembly was held together with roll pins. The belt was run in two configurations, un-guided and guided.

As indicated previously, it was expected that the compression strand would remain straight while transferring torque from one shaft to the next. In operation this was not the case. The compression strand actually attempted to buckle and bowed out due to the restraint of the bands. In essence, the belt provided its own tension to the bands by resisting the buckling. These test results were confirmed with modeling.

The system was next run with snubbers on both the inside and outside of the compression strand. This configuration resisted the buckling of the strand. The system ran a limited amount of time before the nylon snubber face near the entrance of the belt into the compression strand began to melt. Test conditions of 4000 rpm, 100 lb-ft were achieved in this test configuration.

The snubbers were then removed from the system and an attempt was made to duplicate these test conditions. The belt ran for a short period of time at the conditions of 4000 rpm, 100 lb-ft prior to overloading of the plastic toes.

### System Modeling

Software is currently being used to model the compression belt system. The initial results from the model appear to agree with observations that have been made in the test lab. A few of the observations that have made to date are as follows:
- Entrapping, aperture type joints are not necessary to keep adjacent pitches from coming apart.
- Convex-convex rocking action between guides is held together by the friction at the joint contact.
- The compression strand attempts to bow out from a straight line.
- The belt appears to be more rigid than the sprocket teeth.
- The belt attempts to ride out as far as possible on the sprockets, taking the longest path possible as they try to relieve their compressive pressure.
- Current results indicate that the blocks themselves may generate tension in proportion to the applied torque.

As previously discussed, it was felt that the compression strand would maintain a straight path and the flats on the ends of the guide links would adequately distribute the load. Modeling and test results have indicated that this is not the case. The compression strand actually bows out in operation and the compressive load is transferred through the transition radii between the flat and the outside flank of the link. These radii were chosen to allow for contact between adjacent pitches when articulated over the sprocket teeth while minimizing chain length variation. The radii were not optimized for contact stress, as this was not a primary concern in the initial design phase.

A balance must be met between geometry that yields acceptable contact stresses between the elements in the compression strand and also allows for nearly constant belt length as the pitches articulate. Determination of geometry that will yield acceptable stress levels is a straightforward exercise. For the current belt geometry this is simply an investigation of cylinder to cylinder contact stress calculations.

The compression HyVo development program has yielded encouraging results to date. Limited running on a test stand has indicated that the belt generates it own tension by the bands resistance of the bowing of the compression strand. Simulation results appear to substantiate this finding. Due to the comparatively large running radii, the fully reversed bending stress experienced by the bands is low. As a result, indications are that the belt will have a large torque carrying capacity.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A compression-type chain for transmission of power from a driving sprocket having teeth to a driven sprocket having teeth, comprising:
a) a plurality of sprocket-engaging blocks (4) having a body with a sides and a thickness therebetween, an upper surface, and teeth opposite the upper surface, adapted to engage with the teeth of the driving sprocket and the teeth of the driven sprocket;
b) a plurality of guide links (5), each guide link having a body with a thickness, a top surface, a bottom surface, a leading end and a trailing end;
each guide link being movably fastened in pairs on opposite sides of the sprocket-engaging blocks to two adjoining sprocket-engaging blocks, the guide link being dimensioned so that when the guide links and sprocket-engaging blocks are assembled, the top surfaces of the guide links project further than the top surfaces of the sprocket-engaging blocks, forming rails defining a trough therebetween;
all of the guide links and sprocket-engaging blocks fastened together forming a continuous chain; and
c) a retaining band (10) running around the chain in the trough, contacting the upper surface of the sprocket engaging blocks;
so that when the chain is engaged with the driven sprocket and the driving sprocket, and rotational force is applied to the driven sprocket, the force is transferred by the teeth of the driving sprocket to the sprocket-engaging blocks engaged with the driving sprocket, then to the guide links fastened to the sprocket-engaging blocks, and the leading edge of each guide link between the driving sprocket and the driven sprocket transfers force to the trailing end of the next guide link, until the force is transferred to the sprocket-engaging blocks engaged with the driven sprocket, and thence as a rotational force to the driven sprocket.

2. The chain of claim 1, in which the guide links are fastened together around the sprocket-engaging blocks by pins running through holes in the guide links and the sprocket-engaging blocks.

3. The chain of claim 1 or 2, further comprising a plurality of pins running between the pairs of guide links in the trough, retaining the band therein.

4. The chain of claim 1, 2 or 3, in which the retaining band comprises a plurality of laminations of steel band.

5. The chain of claim 1, 2 or 3, in which the retaining band is made of a polymer.

6. The chain of any one of claims 1 to 5, in which the leading end and trailing end of the guide links are substantially flat.

7. The chain of any one of claims 1 to 6, in which the guide link comprises a tapered area forming a lower part of the leading end and trailing end, to provide clearance as the chain wraps around the sprockets.
